(19) Europäisches Patentamt
European Patent Office
Office européen des brevets

(11) **EP 3 466 635 A1**

(12) **EUROPEAN PATENT APPLICATION**
published in accordance with Art. 153(4) EPC

(43) Date of publication:
**10.04.2019 Bulletin 2019/15**

(51) Int Cl.:
***B29C 45/14*** (2006.01)        ***B29C 65/40*** (2006.01)
***B32B 27/34*** (2006.01)

(21) Application number: **17806597.5**

(22) Date of filing: **29.05.2017**

(86) International application number:
**PCT/JP2017/019897**

(87) International publication number:
**WO 2017/209042 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.05.2016 JP 2016107122**

(71) Applicant: **Toray Industries, Inc.**
**Tokyo 103-8666 (JP)**

(72) Inventors:
• **HONDA, Yoshiyuki**
**Nagoya-shi**
**Aichi 455-8502 (JP)**
• **HATTORI, Kimihiko**
**Nagoya-shi**
**Aichi 455-8502 (JP)**
• **KONO, Shunji**
**Nagoya-shi**
**Aichi 455-8502 (JP)**

(74) Representative: **Kador & Partner PartG mbB**
**Corneliusstraße 15**
**80469 München (DE)**

(54) **COMPOSITE MOLDED ARTICLE FORMED FROM POLYAMIDE RESIN AND METHOD FOR PRODUCING SAME**

(57)    The objective of the present invention is to provide a fiber-reinforced composite molded article which has excellent weldability, stiffness and dimensional stability; and this objective is achieved by a composite molded article formed from a polyamide resin, which is obtained by at least partially bonding a polyamide resin molded article that is formed from a polyamide resin composition and a fiber-reinforced polyamide resin base that is obtained by impregnating a reinforcing fiber base with a polyamide resin for impregnation, and wherein the heat quantity required for melting of the polyamide resin for impregnation satisfies $300 < Q < 425$ (J/g) and the SP value of the polyamide resin for impregnation as calculated from Fedors' equation satisfies $11 < \sigma < 13.2$ $((cal/cm^3)^{1/2})$.

FIG. 1

**Description**

TECHNICAL FIELD

The present invention relates to a composite molded article formed from a polyamide resin that includes a fiber-reinforced polyamide resin base and a polyamide resin molded article, and a method for producing the same.

BACKGROUND ART

Polyamide resins are excellent in mechanical properties, heat resistance, and chemical resistance, and thus are preferably used for applications such as automobiles, and electric and electronic components. In particular, fiber-reinforced polyamide resins reinforced with glass fibers, carbon fibers, or the like can be greatly improved in mechanical properties as compared with other thermoplastic resins, and are under development as a substitute for metals. Furthermore, in recent years, fiber-reinforced polyamide resins are expected to be applied to structural members having a large influence on the weight of vehicles, and further improvement of mechanical properties is desired.

As a technique for further improving the mechanical properties of thermoplastic resin molded articles such as those formed from a polyamide resin, there is a method of making a composite of a fiber-reinforced resin base containing continuous reinforcing fibers and an injection-molded article. From the viewpoint of making a composite, there is a challenge of weldability between materials. As a technique for improving the weldability, there is known an integrally molded article formed from a polyamide resin, which contains a polyamide resin composition containing a polyamide 6 resin and a polyamide 6/66 resin (see, for example, Patent Document 1). There is also known an injection welding material containing a polyamide 66 resin, a polyamide 12 resin, and a polyamide 6/66 resin (see, for example, Patent Document 2).

PRIOR ART DOCUMENTS

PATENT DOCUMENTS

Patent Document 1: Japanese Patent Laid-open Publication No. 11-348067
Patent Document 2: Japanese Patent No. 3191638

SUMMARY OF THE INVENTION

PROBLEMS TO BE SOLVED BY THE INVENTION

The integrally molded article formed from a polyamide resin of Patent Document 1, however, is not so effective in improving the stiffness because the primary molding material of the molded article does not contain continuous fibers, and the resin composition is also insufficient in weldability in molding at low temperatures or molding into large molded articles because it contains a polyamide 6 resin. The injection welding material of Patent Document 2 also has a problem that the material does not improve the stiffness so much despite being a composite material, and that the material is low in weldability because it contains a polyamide 66 resin. Further, the injection welding material also has a problem of large warpage caused by a difference in linear expansion when the material contains the polyamide 66 resin at a high blend ratio. In view of these problems of conventional techniques, it is an object of the present invention to provide a composite molded article formed from a polyamide resin that is excellent in weldability, stiffness, and low warpage properties, and a method for producing the same.

SOLUTIONS TO THE PROBLEMS

In order to solve the above-mentioned problems, the present invention mainly has the following configuration.

[1] A composite molded article formed from a polyamide resin, including: a fiber-reinforced polyamide resin base including a reinforcing fiber base and a polyamide resin for impregnation that is impregnated into the reinforcing fiber base; and a polyamide resin molded article formed from a polyamide resin composition, the fiber-reinforced polyamide resin base and the polyamide resin molded article being at least partially bonded together, the polyamide resin for impregnation having a heat quantity required for melting that satisfies $300 < Q < 425$ (J/g) and a solubility parameter (SP value) as calculated from Fedors' equation that satisfies $11 < \sigma < 13.2$ $((cal/cm^3)^{1/2})$.

[2] The composite molded article formed from a polyamide resin according to [1], wherein the polyamide resin for impregnation contains a polyamide copolymer containing 30 to 90% by weight of a polyamide 6 component and 70 to 10% by weight of a polyamide 66 component.

[3] The composite molded article formed from a polyamide resin according to [1] or [2], wherein the polyamide resin composition contains a polyamide resin and 10 to 250 parts by weight of a filler based on 100 parts by weight of the polyamide resin.

[4] The composite molded article formed from a polyamide resin according to any one of [1] to [3], wherein the polyamide resin composition contains a polyamide 6 resin as a main component.

[5] The composite molded article formed from a polyamide resin according to any one of [1] to [4], wherein the reinforcing fiber base is formed from continuous reinforcing fibers arranged in one direction.

[6] The composite molded article formed from a polyamide resin according to [5], wherein the reinforcing fibers are carbon fibers, and the fiber-reinforced polyamide resin base has a fiber content of 10 to 70% by volume.

[7] A method for producing a composite molded article formed from a polyamide resin, the method including: preliminarily placing, in a mold, a fiber-reinforced polyamide resin base including a reinforcing fiber base and a polyamide resin for impregnation that is impregnated into the reinforcing fiber base; injection-molding a polyamide resin composition into the mold; and fusion-bonding the polyamide resin composition with the fiber-reinforced polyamide resin base, the polyamide resin for impregnation having a heat quantity required for melting that satisfies $300 < Q < 425$ (J/g) and a solubility parameter (SP value) as calculated from Fedors' equation that satisfies $11 < \sigma < 13.2$ $((cal/cm^3)^{1/2})$.

[8] The production method according to [7], wherein the polyamide resin for impregnation contains a polyamide copolymer containing 30 to 90% by weight of a polyamide 6 component and 70 to 10% by weight of a polyamide 66 component.

[9] The production method according to [7] or [8], wherein the polyamide resin composition contains a polyamide resin and 10 to 250 parts by weight of a filler based on 100 parts by weight of the polyamide resin.

[10] The production method according to any one of [7] to [9], wherein the polyamide resin composition contains a polyamide 6 resin as a main component.

[11] The production method according to any one of [7] to [10], wherein the reinforcing fiber base is formed from continuous reinforcing fibers arranged in one direction.

[12] The production method according to [11], wherein the reinforcing fibers are carbon fibers, and the fiber-reinforced polyamide resin base has a fiber content of 10 to 70% by volume.

EFFECTS OF THE INVENTION

According to the present invention, it is possible to provide a fiber-reinforced composite molded article excellent in weldability, stiffness, and low warpage properties (dimensional stability).

BRIEF DESCRIPTION OF THE DRAWING

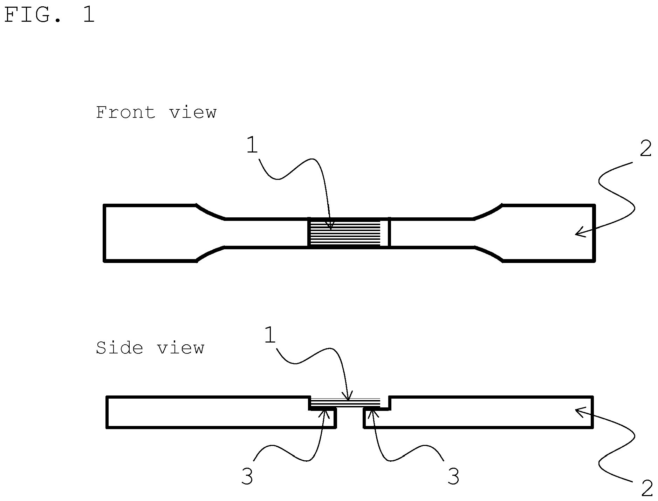

Fig. 1 shows a shape of a test piece for evaluation of welding strength.

EMBODIMENT OF THE INVENTION

Hereinafter, an embodiment of the present invention will be described in detail.

The composite molded article formed from a polyamide resin according to an embodiment of the present invention includes a fiber-reinforced polyamide resin base and a polyamide resin molded article.

The fiber-reinforced polyamide resin base includes a reinforcing fiber base and a polyamide resin for impregnation that is impregnated into the reinforcing fiber base. Examples of the form of the reinforcing fiber base include a sheet material in which continuous reinforcing fibers are arranged, and a mat material in which discontinuous reinforcing fibers are dispersed. Continuous reinforcing fibers are those that continue seamlessly in the fiber-reinforced polyamide resin base. Examples of forms and arrangements of the sheet material include those in which fibers are aligned in one direction, a woven fabric (cloth), a knitted fabric, a braided cord, and a tow. Meanwhile, the mat material can be obtained by an arbitrary method, such as a wet method in which discontinuous reinforcing fibers are dispersed in a solution and then formed into a sheet, and a dry method using a carding apparatus or an air-laying apparatus. Among them, a sheet material in which continuous reinforcing fibers are arranged in one direction is preferable in view of efficiently increasing the stiffness in a specific direction.

The type of the reinforcing fibers or the discontinuous fibers used in the reinforcing fiber base is not particularly limited, and examples thereof include carbon fibers, metal fibers, organic fibers, and inorganic fibers. The reinforcing fiber base may be formed from two or more of them.

Examples of the carbon fibers include PAN-based carbon fibers made from polyacrylonitrile (PAN) fibers as a raw material, pitch-based carbon fibers made from petroleum tar and petroleum pitch as raw materials, cellulose-based carbon fibers made from viscose rayon and cellulose acetate as raw materials, vapor-grown carbon fibers made from hydrocarbons as raw materials, and graphitized fibers of these. Among these carbon fibers, PAN-based carbon fibers are preferably used because they are excellent in the balance between the strength and elastic modulus.

Examples of the metal fibers include fibers made from metals such as iron, gold, silver, copper, aluminum, brass, and stainless steel.

Examples of the organic fibers include fibers made from organic materials such as aramid, polybenzoxazole (PBO), polyphenylene sulfide, a polyester, a polyamide, and polyethylene. Examples of the aramid fibers include para-aramid fibers excellent in strength and elastic modulus, and meta-aramid fibers excellent in flame retardancy and long-term heat resistance. Examples of the para-aramid fibers include polyparaphenylene terephthalamide fibers and copolyparaphenylene-3,4'-oxydiphenylene terephthalamide fibers, and examples of the meta-aramid fibers include polymetaphenylene isophthalamide fibers. The aramid fibers used are preferably para-aramid fibers having a higher elastic modulus than that of the meta-aramid fibers.

Examples of the inorganic fibers include fibers made from inorganic materials such as glass, basalt, silicon carbide, and silicon nitride. Examples of the glass fibers include E glass fibers (for electric purposes), C glass fibers (for anticorrosion purposes), S glass fibers, and T glass fibers (of high strength and high elastic modulus). The basalt fibers are a fiberized material of mineral basalt, and are fibers excellent in heat resistance. Basalt generally contains 9 to 25% by weight of FeO or $FeO_2$ that is a compound of iron, and 1 to 6% by weight of TiO or $TiO_2$ that is a compound of titanium, and can be fiberized in a molten state in which the amounts of these components are increased.

Since the fiber-reinforced polyamide resin base according to the embodiment of the present invention is often expected to function as a reinforcing material, the fiber-reinforced polyamide resin base is desired to exhibit improved mechanical properties. In order to exhibit improved mechanical properties, the fiber-reinforced polyamide resin base preferably contains carbon fibers as the reinforcing fibers or the discontinuous fibers.

In the fiber-reinforced polyamide resin base, the reinforcing fibers or the discontinuous fibers used in the reinforcing fiber base are usually composed of one reinforcing fiber bundle or a plurality of arranged reinforcing fiber bundles obtained by bundling a large number of monofilaments. The total number of filaments (number of monofilaments) of the reinforcing fiber base composed of one reinforcing fiber bundle or a plurality of arranged reinforcing fiber bundles is preferably 1,000 to 2,000,000. In consideration of the balance between productivity and dispersibility or handling properties, the total number of filaments of the reinforcing fiber base is more preferably 1,000 to 1,000,000, still more preferably 1,000 to 600,000, particularly preferably 1,000 to 300,000.

One reinforcing fiber bundle is preferably formed by bundling 1,000 to 50,000 monofilaments of reinforcing fibers having an average diameter of 5 to 10 μm.

In the fiber-reinforced polyamide resin base according to the present invention, the polyamide resin for impregnation that is impregnated into the reinforcing fiber base in the form of a sheet material or a mat material satisfies the requirements described later, so that the polyamide resin for impregnation can be satisfactorily welded to the polyamide resin molded article made of a polyamide resin composition having a different main component.

The polyamide resin for impregnation is a polyamide mainly made from (i) an amino acid, (ii) a lactam, or (iii) a diamine and a dicarboxylic acid as raw materials. Representative examples of raw materials of the polyamide resin for impregnation include: amino acids such as 6-aminocaproic acid, 11-aminoundecanoic acid, 12-aminododecanoic acid, and p-aminomethyl benzoic acid; lactams such as ε-caprolactam and ω-laurolactam; aliphatic diamines such as tetramethylenediamine, pentamethylenediamine, hexamethylenediamine, 2-methylpentamethylenediamine, nonamethylenediamine, decamethylenediamine, undecamethylenediamine, dodecamethylenediamine, 2,2,4-/2,4,4-trimethylhexamethylenediamine, 5-methylnonamethylenediamine, and 2-methyloctamethylenediamine; aromatic diamines such as m-xylylenediamine and p-xylylenediamine; alicyclic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethyl piperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sodium sulfoisophthalic acid, 2,6-naphthalenedicarboxylic acid, hexahydroterephthalic acid, and hexahydroisophthalic acid; and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid. In the embodiment of the present invention, two or more polyamide homopolymers or polyamide copolymers derived from these raw materials may be blended as raw materials of the polyamide resin for impregnation.

Specific examples of the polyamide resin for impregnation include polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecanamide (nylon 11), polydodecanamide (nylon 12), a polycaproamide/polyhexamethylene adipamide copolymer (nylon 6/66), a polycaproamide/polyhexamethylene terephthalamide copolymer (nylon 6/6T), a polyhexamethylene adipamide/polyhexamethylene terephthalamide copolymer (nylon 66/6T), a polyhexamethylene adipamide/polyhexamethylene isophthalamide copol-ymer (nylon 66/6I), a polyhexamethylene terephthalamide/polyhexamethylene isophthalamide copolymer (nylon 6T/6I), a polyhexamethylene terephthalamide/polyundecanamide copolymer (nylon 6T/11), a polyhexamethylene terephthalamide/polydodecanamide copolymer (nylon 6T/12), a polyhexamethylene adipamide/polyhexamethylene terephthalamide/polyhexamethylene isophthalamide copolymer (nylon 66/6T/6I), polyxylylene adipamide (nylon XD6), polyxylylene sebacamide (nylon XD10), a polyhexamethylene terephthalamide/polypentamethylene terephthalamide copolymer (nylon 6T/5T), a polyhexamethylene terephthalamide/poly-2-methylpentamethylene terephthalamide copolymer (nylon 6T/M5T), a polypentamethylene terephthalamide/polydecamethylene terephthalamide copolymer (nylon 5T/10T), polynonamethylene terephthalamide (nylon 9T), polydecamethylene terephthalamide (nylon 10T), and polydodecamethylene terephthalamide (nylon 12T). Specific examples of the polyamide resin for impregnation also include mixtures and copolymers of the above-mentioned compounds. Among the above-mentioned compounds, those including "/" are copolymers. The same shall apply hereinafter.

In the present invention, it is important that the solubility parameter (SP value) $\sigma$ of the polyamide resin for impregnation be $11 < \sigma < 13.2$ ($(cal/cm^3)^{1/2}$) from the viewpoint of improving the weldability with the polyamide resin molded article. The SP value is preferably $11.2 < \sigma < 13$, more preferably $11.4 < \sigma < 12.8$. If the SP value is too small, the polyamide resin for impregnation is low in weldability, whereas if the SP value is too large, the polyamide resin for impregnation has a high melting point to make it difficult to produce a fiber-reinforced polyamide resin base.

Herein, as for a specific method for calculating the SP value obtained by the Fedors' method, as described in Polym. Eng. Sci., 14, 147 (1974), the SP value $\delta$ is calculated from the following equation (1):

$$\text{Equation (1): } \delta = (\Sigma\Delta e_i)^{1/2}/(\Sigma\Delta v_t)^{1/2}$$

wherein $\Delta e_i$ and $\Delta v_t$ are the evaporation energy (cal/mol) and molar volume ($cm^3$/mol) of each atom or atomic group, respectively.

In addition, the SP value of a copolymer is calculated from the following equation (2):

$$\text{Equation (2): } \delta co = 1/(W1/\delta1 + W2/\delta2 + \cdots + Wn/\delta n)$$

wherein $\delta co$ is the SP value of the copolymer, $\delta 1$, $\delta 2$ ... and $\delta n$ are each the SP value of each of the monomers making up the copolymer calculated by the Fedors' method, and W1, W2, ... and Wn are each the weight fraction of each of the monomers making up the copolymer.

It is important that the heat quantity required for melting of the polyamide resin for impregnation be $300 < Q < 425$ (J/g). The heat quantity required for melting is preferably $330 < Q < 390$, more preferably $350 < Q < 380$. If the heat quantity required for melting is too small, the polyamide resin for impregnation is low in thermal stability to make it difficult to produce a fiber-reinforced polyamide resin base, whereas if the heat quantity required for melting is too large, the polyamide resin for impregnation is low in weldability. The heat quantity required for melting Q is calculated from the following equation (3):

$$\text{Equation (3): } Q = Cp \times (Tm - 60) + \Delta H.$$

Further, the heat quantity required for melting Qam of a nylon resin that does not exhibit a melting point (for example, an amorphous nylon resin) is calculated from the following equation (4):

$$\text{Equation (4): } Qam = Cp \times (Tg + 60).$$

In the equations, Cp is the specific heat capacity (J/°C·g), Tm is the melting point (°C), Tg is the glass transition point (°C), and ΔH is the heat of fusion (J/g). In addition, Cp is a value measured according to JIS K 7123-1987 (2006), Tm and Tg are values measured according to JIS K 7121-1987 (2006), and ΔH is a value measured according to JIS K 7122-1987 (2006). All the values are measured by differential scanning calorimetry (DSC).

As a polyamide resin for impregnation satisfying the above-mentioned requirements, polyamide 6/66 is particularly suitable. Polyamide 6/66 having a copolymerization ratio of 30 to 90% by weight of a polyamide 6 component and 70 to 10% by weight of a polyamide 66 component is preferable in terms of productivity and welding of the polyamide resin base, and the amount of the polyamide 6 component is more preferably 85% by weight or less, still more preferably 40% by weight or more.

The polyamide resin molded article according to the embodiment of the present invention is formed from a polyamide resin composition.

The polyamide resin composition contains at least a polyamide resin. As the polyamide resin, various polyamides can be selected similarly to the case of the above-mentioned polyamide resin for impregnation.

It is preferable that the polyamide resin for impregnation and the polyamide resin composition be different from each other. The polyamide resin for impregnation and the polyamide resin composition that are different from each other provide stiffness, injection moldability, and weldability adequate for a composite molded article.

In general, a fiber-reinforced polyamide resin base containing relatively long fibers compared to short fibers used in injection molding materials has a small coefficient of linear expansion. Therefore, a composite molded article obtained by bonding a fiber-reinforced polyamide resin base and a polyamide resin molded article together may undergo dimensional change such as warpage. Therefore, in order to improve the dimensional stability of the composite molded article formed from a polyamide resin, it is effective to reduce the difference in coefficient of linear expansion between the polyamide resin molded article and the fiber-reinforced polyamide resin base, and the polyamide resin composition preferably contains a filler. The filler used may be either an organic filler or an inorganic filler, and either a fibrous filler or a non-fibrous filler.

Examples of the fibrous filler include fibrous and whisker fillers such as glass fibers, PAN (polyacrylonitrile)-based or pitch-based carbon fibers, metal fibers such as stainless steel fibers, aluminum fibers, and brass fibers, organic fibers such as aromatic polyamide fibers, gypsum fibers, ceramic fibers, asbestos fibers, zirconia fibers, alumina fibers, silica fibers, titanium oxide fibers, silicon carbide fibers, rock wool, potassium titanate whiskers, zinc oxide whiskers, calcium carbonate whiskers, wollastonite whiskers, aluminum borate whiskers, and silicon nitride whiskers. The fibrous filler is particularly preferably glass fibers.

The type of the glass fibers is not particularly limited as long as the fibers are generally used for reinforcing a resin. For example, glass fibers selected from long fiber type or short fiber type chopped strands and milled fibers can be used. Further, the glass fibers may be coated or bundled with a thermoplastic resin such as an ethylene/vinyl acetate copolymer, or a thermosetting resin such as an epoxy resin. Further, the cross-sectional shape of the glass fibers is not limited, and examples of the cross-sectional shape include a circular shape, a flat gourd shape, a cocoon shape, an oval shape, an elliptical shape, a rectangular shape, and shapes like these shapes. From the viewpoint of reducing the warpage peculiar to the molded article, the cross section of the glass fibers preferably has a flat shape having a ratio of major axis/minor axis of 1.5 or more, more preferably 2 or more, and preferably 10 or less, more preferably 6 or less. If the ratio of major axis/minor axis is less than 1.5, the effect of the flat cross section is small.

Examples of the non-fibrous filler include non-swellable silicates such as talc, wollastonite, zeolite, sericite, mica, kaolin, clay, pyrophyllite, bentonite, asbestos, alumina silicate, and calcium silicate; swellable lamellar silicates represented by swellable micas such as Li-type fluorine taeniolite, Na-type fluorine taeniolite, Na-type tetrasilicic fluorine mica, and Li-type tetrasilicic fluorine mica; metal oxides such as silicon oxide, magnesium oxide, alumina, silica, diatomaceous earth, zirconium oxide, titanium oxide, iron oxide, zinc oxide, calcium oxide, tin oxide, and antimony oxide; metal carbonates such as calcium carbonate, magnesium carbonate, zinc carbonate, barium carbonate, dolomite, and hydrotalcite; metal sulfates such as calcium sulfate and barium sulfate; metal hydroxides such as magnesium hydroxide, calcium hydroxide, aluminum hydroxide, and basic magnesium carbonate; various clay minerals such as smectite clay minerals including montmorillonite, beidellite, nontronite, saponite, hectorite, and sauconite, vermiculite, halloysite, kanemite, kenyaite, zirconium phosphate, and titanium phosphate; glass beads, glass flakes, ceramic beads, boron nitride, aluminum nitride, silicon carbide, calcium phosphate, carbon black, and graphite. In the above-mentioned swellable lamellar silicates, exchangeable cations present between the lamellas may be exchanged with organic onium ions, and examples of the organic onium ions include an ammonium ion, a phosphonium ion, and a sulfonium ion. The polyamide resin composition may contain two or more of these fillers.

The surface of the non-fibrous filler may be treated with a known coupling agent (for example, a silane coupling agent or a titanate coupling agent) or the like, and in this case, it is possible to further improve the mechanical properties and surface appearance of the molded article. For example, a method of preliminarily surface-treating the filler with the coupling agent according to a common method and then melt-kneading the filler with the polyamide resin is preferably employed, but it is also possible to employ an integral blending method of adding the coupling agent at the time of melt-kneading the filler and the polyamide resin without preliminarily surface-treating the filler. The amount of the coupling agent used in the treatment is preferably 0.05 parts by weight or more, more preferably 0.5 parts by weight or more based on 100 parts by weight of the filler. On the other hand, the amount of the coupling agent used in the treatment is preferably 10 parts by weight or less, more preferably 3 parts by weight or less based on 100 parts by weight of the filler.

In the polyamide resin composition according to the embodiment of the present invention, the content of the filler is preferably 10 to 250 parts by weight based on 100 parts by weight of the polyamide resin. When the content of the filler is 10 parts by weight or more, the dimensional stability of the molded article can be further improved. The content of the filler is more preferably 20 parts by weight or more, still more preferably 30 parts by weight or more. On the other hand, when the content of the filler is 250 parts by weight or less, the dimensional stability of the molded article is improved while maintaining the weldability. The content of the filler is more preferably 150 parts by weight or less, still more preferably 100 parts by weight or less.

Furthermore, the main component of the polyamide resin composition is suitably a polyamide 6 resin since the polyamide 6 resin has a small coefficient of linear expansion, and is accordingly high in dimensional stability, is excellent in moldability, and has high mechanical strength.

The polyamide resin composition according to the embodiment of the present invention may contain resins other than the polyamide resin, and various additives according to the purpose as long as the effect of the present invention is not impaired. In this case, the above-mentioned preferable range of the amount of the filler represents the ratio of the filler to the composition containing resins other than the polyamide resin and various additives.

Specific examples of resins other than the polyamide resin include a polyester resin, a polyolefin resin, a modified polyphenylene ether resin, a polysulfone resin, a polyketone resin, a polyetherimide resin, a polyarylate resin, a polyethersulfone resin, a polyetherketone resin, a polythioether ketone resin, a polyether ether ketone resin, a polyimide resin, a polyamide imide resin, and a polytetrafluoroethylene resin. In the case where these resins are blended, the content of these resins is preferably 30 parts by weight or less, more preferably 20 parts by weight or less based on 100 parts by weight of the polyamide resin in order to fully exploit the characteristics of the polyamide resin.

Specific examples of various additives include: thermal stabilizers other than a copper compound; coupling agents such as an isocyanate compound, an organosilane compound, an organic titanate compound, an organoborane compound, and an epoxy compound; plasticizers such as a polyalkylene oxide oligomer compound, a thioether compound, and an ester compound; crystal nucleating agents such as polyether ether ketone; metal soaps such as montanic acid waxes, lithium stearate, and aluminum stearate; mold release agents such as an ethylenediamine-stearic acid-sebacic acid polycondensate and a silicone compound; lubricants, ultraviolet inhibitors, coloring agents, flame retardants, impact resistance improvers, and foaming agents. In the case where the polyamide resin composition contains these additives, the content of these additives is preferably 10 parts by weight or less, more preferably 1 part by weight or less based on 100 parts by weight of the polyamide resin in order to fully exploit the characteristics of the polyamide resin.

Examples of the thermal stabilizers other than a copper compound include a phenol compound, a sulfur compound, and an amine compound. Two or more of these compounds may be used as the thermal stabilizers other than a copper compound.

As the phenol compound, a hindered phenol compound is preferably used, and N,N'-hexamethylene bis(3,5-di-t-butyl-4-hydroxy-hydrocinnamide) and tetrakis[methylene-3-(3',5'-di-t-butyl-4'-hydroxyphenyl)propionate]methane are preferably used.

Examples of the sulfur compound include an organic thioacid compound, a mercaptobenzimidazole compound, a dithiocarbamic acid compound, and a thiourea compound. Among these sulfur compounds, the mercaptobenzimidazole compound and the organic thioacid compound are preferable. In particular, a thioether compound having a thioether structure can be suitably used as a thermal stabilizer since the compound receives oxygen from an oxidized substance and reduces the substance. Preferable specific examples of the thioether compound include 2-mercaptobenzimidazole, 2-mercaptomethylbenzimidazole, ditetradecyl thiodipropionate, dioctadecyl thiodipropionate, pentaerythritol tetrakis(3-dodecylthiopropionate), and pentaerythritol tetrakis(3-laurylthiopropionate), and more preferable specific examples thereof include pentaerythritol tetrakis(3-dodecylthiopropionate) and pentaerythritol tetrakis(3-laurylthiopropionate). The molecular weight of the sulfur compound is usually 200 or more, preferably 500 or more, and the upper limit thereof is usually 3,000.

As the amine compound, a compound having a diphenylamine skeleton, a compound having a phenylnaphthylamine skeleton, and a compound having a dinaphthylamine skeleton are preferable, and a compound having a diphenylamine skeleton and a compound having a phenylnaphthylamine skeleton are more preferable. Among these amine compounds, 4,4'-bis($\alpha,\alpha$-dimethylbenzyl)diphenylamine, N,N'-di-2-naphthyl-p-phenylenediamine, and N,N'-diphenyl-p-phenylenediamine are more preferable, and N,N'-di-2-naphthyl-p-phenylenediamine and 4,4'-bis($\alpha,\alpha$-dimethylbenzyl)diphenylamine are particularly preferable.

A more preferable combination of the sulfur compound and the amine compound is a combination of pentaerythritol tetrakis(3-laurylthiopropionate) and 4,4'-bis($\alpha,\alpha$-dimethylbenzyl)diphenylamine.

The method for producing the polyamide resin composition according to the embodiment of the present invention is not particularly limited, and it is possible to employ the production in a molten state or in a solution state. From the viewpoint of improving the reactivity, production in a molten state can be preferably employed. For the production in a molten state, melt kneading with an extruder, melt kneading with a kneader, and the like can be employed. From the viewpoint of productivity, melt kneading with an extruder that is capable of continuous production is preferable. As for the melt kneading with an extruder, one or more extruders including a single-screw extruder, multi-screw extruders such as a twin-screw extruder and a quad-screw extruder, and a twin screw/single screw compounding extruder can be used. From the viewpoint of improving the kneadability, reactivity, and productivity, multi-screw extruders such as a twin-screw extruder and a quad-screw extruder are preferable, and a method by melt kneading using a twin-screw extruder is most preferable.

As for the fiber-reinforced polyamide resin base impregnated with the polyamide resin for impregnation, examples of the method for impregnating the polyamide resin for impregnation into a continuous reinforcing fiber base include: a film method of melting and pressurizing a film-shaped polyamide resin for impregnation to impregnate the resin into a reinforcing fiber bundle; a commingle method of blending a fibrous polyamide resin for impregnation with a reinforcing fiber bundle, and then melting and pressurizing the fibrous polyamide resin for impregnation to impregnate the resin into the reinforcing fiber bundle; a powder method of dispersing a powdery polyamide resin for impregnation in fiber gaps of a reinforcing fiber bundle, and then melting and pressurizing the powdery polyamide resin for impregnation to impregnate the resin into the reinforcing fiber bundle; and a pultrusion method of immersing a reinforcing fiber bundle in a molten polyamide resin for impregnation, and pressurizing the polyamide resin for impregnation to impregnate the resin into the reinforcing fiber bundle. The pultrusion method is preferable because it is capable of producing various kinds of fiber-reinforced polyamide resin bases having various thicknesses and various fiber volume contents.

The thickness of the fiber-reinforced polyamide resin base in the embodiment of the present invention is preferably 0.1 to 1.5 mm. When the thickness is 0.1 mm or more, the strength of the fiber-reinforced polyamide resin base can be improved. The thickness is more preferably 0.2 mm or more. On the other hand, when the thickness is 1.5 mm or less, it is easier to impregnate the polyamide resin for impregnation into the reinforcing fibers. The thickness is more preferably 1 mm or less, still more preferably 0.7 mm or less, even more preferably 0.6 mm or less.

In addition, the fiber-reinforced polyamide resin base according to the embodiment of the present invention preferably contains 10% by volume or more and 70% by volume or less of reinforcing fibers in 100% by volume of the whole fiber-reinforced polyamide resin base. When the fiber-reinforced polyamide resin base contains 10% by volume or more of reinforcing fibers, the strength of the molded article obtained using the fiber-reinforced polyamide resin base can be improved. The content is more preferably 20% by volume or more, still more preferably 30% by volume or more. On the other hand, when the fiber-reinforced polyamide resin base contains 70% by volume or less of reinforcing fibers, it is easier to impregnate the polyamide resin composition into the reinforcing fibers. The content is more preferably 65% by volume or less, still more preferably 60% by volume or less.

Further, the fiber-reinforced polyamide resin base may have desired impregnating ability depending on the usage and purpose thereof. Examples of the fiber-reinforced polyamide resin base include a prepreg with higher impregnating ability, a semi-preg semi-impregnated with the polyamide resin composition, and a fabric with low impregnating ability. In general, a fiber-reinforced polyamide resin base having higher impregnating ability is preferable because the base is more excellent in mechanical properties.

The composite molded article formed from a polyamide resin according to the embodiment of the present invention can be obtained by molding the above-mentioned polyamide resin composition by an arbitrary molding method used for a thermoplastic resin. Examples of the molding method include injection molding, injection compression molding, extrusion molding, compression molding, blow molding, and press molding. Injection molding is preferable from the viewpoint of productivity and easily producing a molded article having a complicated shape. In addition, examples of the shape of the resin molded article include a sheet, a film, and a fiber, and are not particularly limited.

The composite molded article according to the embodiment of the present invention includes the fiber-reinforced polyamide resin base and the polyamide resin molded article, and can be obtained by bonding and integrating the fiber-reinforced polyamide resin base and the polyamide resin molded article together. Examples of the method for bonding and integrating the fiber-reinforced polyamide resin base and the polyamide resin molded article together include various welding techniques such as laser welding, vibration welding, ultrasonic welding, and injection welding, and adhesion with an adhesive. Among them, injection welding is particularly preferable. Injection welding is a method of melting the polyamide resin for impregnation in the fiber-reinforced polyamide resin base preliminarily placed in a mold by heat of the injection-molded polyamide resin composition, and then resolidifying the polyamide resin for impregnation to bond the fiber-reinforced polyamide resin base and the polyamide resin molded article together, and can improve the productivity of the composite molded article.

The composite molded article formed from a polyamide resin according to the embodiment of the present invention can be used for various applications such as aircraft components, automobile components, electric and electronic components, building components, various containers, daily necessities, household goods, and sanitary articles, based on the excellent properties thereof. The composite molded article formed from a polyamide resin according to the embodiment of the present invention can be particularly preferably used for applications such as aircraft components, automobile body components, automobile underhood components, automobile gear components, automobile interior parts, automobile exterior parts, automobile electrical components, and electric and electronic components, which are particularly required to have weldability, stiffness, and dimensional stability. Specifically, the composite molded article formed from a polyamide resin according to the embodiment of the present invention can be preferably used for the following applications: aircraft-related components such as a landing gear pod, a winglet, a spoiler, an edge, a ladder, an elevator, a fairing, and a rib; automobile body components such as a front body, an underbody, various pillars, various members, various frames, various beams, various supports, various rails, and various hinges; automobile underhood components such as a cooling fan, top and base of a radiator tank, a cylinder head cover, an oil pan, brake piping, tubes for fuel piping, and waste gas system components; automobile gear components such as a gear, an actuator, a bearing retainer, a bearing cage, a chain guide, and a chain tensioner; automobile interior parts such as a shift lever bracket, a steering lock bracket, a key cylinder, a door inner handle, a door handle cowl, an indoor mirror bracket, an air conditioner switch, an instrumental panel, a console box, a glove box, a steering wheel, and a trim; automobile exterior parts such as a front fender, a rear fender, a fuel lid, a door panel, a cylinder head cover, a door mirror stay, a tailgate panel, a licensed garnish, a roof rail, an engine mount bracket, a rear garnish, a rear spoiler, a trunk lid, a rocker molding, a molding, a lamp housing, a front grill, a mud guard, and a side bumper; automobile electrical components such as connectors and wire harness connectors, motor parts, a lamp socket, a sensor onboard switch, and a combination switch; as well as electric and electronic components including electric components such as an electric generator, an electric motor, a transformer, a current transformer, a voltage regulator, a rectifier, a resistor, an inverter, a relay, a power contact, an electric switch, an interrupter, a switch, a knife switch, another electrode rod, a motor case, a TV housing, a laptop housing and internal parts, a CRT display housing and internal parts, a printer housing and internal parts, mobile terminal housings and internal parts such as a mobile phone, a mobile personal computer, and a handheld mobile terminal, IC-and LED-compatible housings, a capacitor plate, a fuse holder, various gears, various cases, and a cabinet, and electronic components such as a connector, an SMT-compatible connector, a card connector, a jack, a coil, a coil bobbin, a sensor, an LED lamp, a socket, a resistor, a relay, a relay case, a reflector, a small switch, a power supply part, a coil bobbin, a capacitor, a variable capacitor case, an optical pickup chassis, an oscillator, various terminal boards, a transformer, a plug, a printed circuit board, a tuner, a speaker, a microphone, a headphone, a small motor, a magnetic head base, a power module, a Si power module and a SiC power module, a semiconductor, a liquid crystal, a FDD carriage, a FDD chassis, a motor brush holder, a transformer member, a parabolic antenna, and a computer-related component.

EXAMPLES

Hereinafter, the present invention will be described in more detail with reference to examples, but the following examples do not limit the present invention in any way, and modifications within the scope not departing from the gist of the present invention are within the technical scope of the present invention. Evaluations of properties in the present invention were carried out according to the following methods.

[Heat quantity required for melting of polyamide resin for impregnation]

As for polyamide resins for impregnation, the heat quantities required for melting Q and Qam were calculated using the equations (3) and (4). The specific heat capacity was measured according to JIS K 7123-1987 (2006) at a cooling rate of 10°C/min, the melting point Tm and the glass transition point Tg were measured according to JIS K 7121-1987 (2006) at a heating rate of 20°C/min, and the heat of fusion was measured according to JIS K 7122-1987 (2006) at a heating rate of 20°C/min. In all of these measurements, a crystallization temperature measuring machine Diamond-DSC manufactured by PerkinElmer Co., Ltd. was used.
As for Comparative Example 7, the heat quantity required for melting was calculated from the fiber-reinforced polyamide resin base after the annealing treatment.

[SP value of polyamide resin for impregnation]

As for polyamide resins for impregnation, the SP values $\delta$ and $\delta co$ were calculated using the equations (1) and (2).

[Welding strength]

Each of the polyamide resin compositions shown in the tables was vacuum-dried at 80°C for 12 hours, and each of the fiber-reinforced polyamide resin bases shown in the tables and cut into an appropriate size was placed in a mold capable of producing a test piece having the shape as shown in Fig. 1. Using an injection molding machine (J110AD-110H manufactured by THE JAPAN STEEL WORKS, LTD.) and under the conditions including a cylinder temperature:

the melting point of the polyamide resin composition + 35°C (260°C in Example 7) and a mold temperature: 60°C, a composite molded article formed from a polyamide resin, in which both ends of the fiber-reinforced polyamide resin base and a polyamide resin molded article were bonded together, was obtained by injection welding. The molded article as a whole had a shape conforming to the ISO Type-A standard. The molded article was subjected to a tensile test according to ISO 527-1 and -2 except that the weldability was evaluated about a welding surface on one side having an area of 40 mm$^2$ and the tensile speed was 1 mm/min. The measurement was carried out three times, and the average of the maximum loads until rupture was evaluated as the welding strength. Herein, a test piece having a low welding strength and peeled off during molding or before evaluation was evaluated as "poor".

[Flexural modulus]

Each of the polyamide resin compositions shown in the tables was vacuum-dried at 80°C for 12 hours, and each of the fiber-reinforced polyamide resin bases shown in the tables and cut into an appropriate size was placed on each surface of a flat mold 150 mm in length × 50 mm in width × 3 mm in thickness. Using an injection molding machine (J110AD-110H manufactured by THE JAPAN STEEL WORKS, LTD.) and under the conditions including a cylinder temperature: 300°C and a mold temperature: 120°C, a composite molded article formed from a polyamide, which had a sandwich structure and had the fiber-reinforced polyamide resin bases on both sides of a polyamide resin molded article, was obtained by injection welding. The fiber-reinforced polyamide resin bases were placed so that the axial direction of the reinforcing fibers was substantially parallel to the longitudinal direction of the composite molded article formed from a polyamide resin.

The composite molded article formed from a polyamide resin was cut into 150 mm × 10 mm with the axial direction of the reinforcing fibers of the fiber-reinforced polyamide resin bases being the long side to produce a test piece for a flexural test. The test piece was subjected to a flexural test at a crosshead speed of 2 mm/min using "Instron" (registered trademark) Universal Tester model 5566 (manufactured by Instron Japan Company Limited) according to JIS K 7171-2008. The measurement was carried out three times, and the average of the measured values was calculated as the flexural modulus.

[Amount of warpage]

A test piece of a composite molded article formed from a polyamide resin of 150 mm in length × 50 mm in width × 3 mm in thickness was obtained in the same manner as in the above-mentioned flexural modulus except that the fiber-reinforced polyamide resin base was placed on one side of the polyamide resin molded article.

As for the composite molded article formed from a polyamide resin, the distance between the point where the curvature of the warpage was the maximum and the straight line connecting the ends was evaluated as the amount of warpage according to the following criteria.

    A: less than 5 mm
    B: 5 mm or more and less than 10 mm
    C: 10 mm or more

(Example 1, Examples 4 to 6, Examples 8 to 13, and Comparative Examples 1 to 6)

Each of the fiber-reinforced polyamide resin bases was produced by the following method. Sixteen bobbins each wound with a reinforcing fiber bundle were prepared, and the reinforcing fiber bundles were continuously unreeled from the bobbins through a thread guide. The continuously unreeled reinforcing fiber bundles were impregnated, in an impregnation die, with a polyamide resin for impregnation quantitatively fed from a feeder filled with the polyamide resin for impregnation. As the reinforcing fibers, carbon fiber bundles ("TORAYCA" (registered trademark) T700S-12K manufactured by TORAY INDUSTRIES, INC.) were used, and as the polyamide resin for impregnation, those shown in Tables 1 and 2 were used. The reinforcing fibers impregnated with the polyamide resin for impregnation in the impregnation die were continuously drawn from a nozzle of the impregnation die using a take-up roll. The drawn reinforcing fiber bundles were passed on a cooling roll so that the polyamide resin for impregnation was cooled and solidified, and were wound up on a winder as a fiber-reinforced polyamide resin base. The obtained fiber-reinforced polyamide resin base had a thickness of 0.3 mm, and the reinforcing fibers were arranged in one direction. The content of the reinforcing fibers in the fiber-reinforced polyamide resin base was 50% by volume.

Then, the polyamide resin composition was produced by the following method. Each of the base resins (main component) shown in Tables 1 and 2 was fed from a first feeding port of a twin-screw extruder ZSK57 manufactured by Werner & Pfleiderer Industrielle Backtechnik GmbH, glass fibers as a filler were fed from a second feeding port so that the content thereof would be as shown in Tables 1 and 2, and the components were melt-kneaded at a barrel temperature of melting point + 25°C, a discharge amount of 60 kg/hr, and a screw rotation number of 200 rpm to give pellets of the polyamide resin composition.

Using the fiber-reinforced polyamide resin base and the polyamide resin composition described above, a composite molded article formed from a polyamide resin was produced, and the composite molded article was evaluated for various properties.

(Example 2)

A composite molded article formed from a polyamide resin was produced in the same manner as in Example 1 except that glass fibers were used as the reinforcing fibers, and the composite molded article was evaluated for various properties.

(Example 3)

A fiber-reinforced polyamide resin base was produced according to the following method using the reinforcing fibers and the polyamide resin for impregnation shown in Table 1.

The polyamide resin for impregnation was charged into an extruder, melt-kneaded, and extruded into a film from a film die to give a resin film. In addition, carbon fibers ("TORAYCA" (registered trademark) T700S-12K manufactured by TORAY INDUSTRIES, INC.) used as reinforcing fibers were cut to have a fiber length of 15 mm and charged into an air-laying apparatus to give a mat-shaped reinforcing fiber base having a basis weight of 100 g/m$^2$.

The reinforcing fiber base and the resin film were laminated so that the carbon fiber content would be 40% by weight (30% by volume), and then the laminate was charged into a molding die heated to a die temperature of melting point of the polyamide resin for impregnation + 30°C. Then, the laminate was pressed under heating and pressurization at a pressure of 3 MPa for 10 minutes, and then pressed under cooling at a pressure of 3 MPa to give a fiber-reinforced polyamide resin base. The obtained fiber-reinforced polyamide resin base had a thickness of 0.3 mm, and the arrangement of the reinforcing fibers was isotropic (random).

Using the fiber-reinforced polyamide resin base and a polyamide resin composition produced in the same manner as in Example 1, a composite molded article formed from a polyamide resin was produced, and the composite molded article was evaluated for various properties.

(Example 7)

A polyamide resin composition was produced in the same manner as in Example 1 except that the polyamide composition and the polyamide resin for impregnation shown in Table 1 were used, and that the barrel temperature was set to 300°C in the production method of the polyamide resin composition. Using the polyamide resin composition, a composite molded article formed from a polyamide resin was produced, and the composite molded article was evaluated for various properties.

(Comparative Example 7)

A composite molded article formed from a polyamide resin was produced in the same manner as in Example 1 except that a fiber-reinforced polyamide resin base having been subjected to annealing treatment under the conditions of a treatment temperature of 180°C and a treatment time of 30 minutes was used, and the composite molded article was evaluated for various properties.

(Comparative Example 8)

A composite molded article formed from a polyamide resin was produced in the same manner as in Example 1 except that the polyamide resin for impregnation was a mixture of polyamide 6 and the resin of Reference Example 1 shown below in an amount of 25% by weight and 75% by weight, respectively, and the composite molded article was evaluated for various properties.

(Reinforcing fibers)

Carbon fibers: "TORAYCA" (registered trademark) T700S-12K manufactured by TORAY INDUSTRIES, INC.

(Filler)

Glass fibers: T-275H manufactured by Nippon Electric Glass Co., Ltd., circular cross section, diameter of cross section: 10.5 μm, surface-treated silane coupling agent, fiber length: 3 mm

(Polyamide resin)

Polyamide 6: CM1001 manufactured by TORAY INDUSTRIES, INC., ηr = 2.35
Polyamide 66: E3000F manufactured by TORAY INDUSTRIES, INC., ηr = 2.48
Polyamide 610: CM 2001 manufactured by TORAY INDUSTRIES, INC., ηr = 2.70
Polyamide 12: Grilamid L 20 manufactured by EMS-GRIVORY, medium viscosity grade
Polyamide 6I/6T: Grivory G 21 manufactured by EMS-GRIVORY, ηr = 2.00

(Reference Example 1: polyamide 6/66 = 85/15)

Into a 30-L stainless steel autoclave, 85/15 parts by weight of a polyamide 6/66 salt (an 80% aqueous solution of an equimolar salt of ε-caprolactam/hexamethylenediamine-adipic acid) was charged, and benzoic acid (1.86 g relative to 10 kg of the polyamide 6/66 salt) was charged therein. The contents were polymerized for 3 hours with the internal temperature and the internal pressure being kept at 250°C and 1.5 to 2.0 MPa, respectively. Then, the internal pressure was returned to atmospheric pressure while gradually releasing the pressure, the internal temperature was raised to 270 to 280°C, and polymerization was further carried out for 1 hour. The obtained polyamide 6/66 resin was taken out from the bottom of the autoclave in a strand form, pelletized, and vacuum-dried at 80°C for 24 hours. The obtained polyamide 6/66 had a relative viscosity ηr of 2.35 and a melting point of 194°C.

(Reference Example 2: polyamide 6/66 = 90/10)

Polyamide 6/66 was obtained in the same manner as in Reference Example 1 except that the amount of the polyamide 6/66 salt was changed to 90/10 parts by weight. The obtained polyamide 6/66 resin had a relative viscosity ηr of 2.35 and a melting point of 199°C.

(Reference Example 3: polyamide 6/66 = 40/60)

Polyamide 6/66 was obtained in the same manner as in Reference Example 1 except that the amount of the polyamide 6/66 salt was changed to 40/60 parts by weight. The obtained polyamide 6/66 resin had a relative viscosity ηr of 2.35 and a melting point of 170°C.

(Reference Example 4: polyamide 6/66 = 30/70)

Polyamide 6/66 was obtained in the same manner as in Reference Example 1 except that the amount of the polyamide 6/66 salt was changed to 30/70 parts by weight. The obtained polyamide 6/66 resin had a relative viscosity ηr of 2.35 and a melting point of 182°C.

(Reference Example 5: polyamide 6/66 = 95/5)

Polyamide 6/66 was obtained in the same manner as in Reference Example 1 except that the amount of the polyamide 6/66 salt was changed to 95/5 parts by weight. The obtained polyamide 6/66 resin had a relative viscosity ηr of 2.35 and a melting point of 254°C.

(Reference Example 6: polyamide 6/66 = 5/95)

Polyamide 6/66 was obtained in the same manner as in Reference Example 1 except that the amount of the polyamide 6/66 salt was changed to 5/95 parts by weight. The obtained polyamide 6/66 resin had a relative viscosity ηr of 2.35 and a melting point of 212°C.
Evaluation results of examples and comparative examples are shown in Tables 1 and 2.

[Table 1-1]

| | | | | Example 1 | Example 2 | Example 3 | Example 4 | Example 5 | Example 6 | Example 7 |
|---|---|---|---|---|---|---|---|---|---|---|
| Fiber-reinforced polyamide resin base | Reinforcing fiber base | Reinforcing fibers | | Carbon fibers | Glass fibers | Carbon fibers | Carbon fibers | Carbon fibers | Carbon fibers | Carbon fibers |
| | | Arrangement of reinforcing fibers | | One direction | One direction | Random | One direction | One direction | One direction | One direction |
| | Polyamide resin for impregnation | Polyamide 6/66 | Reference Example 1 | ○ | ○ | ○ | - | - | - | - |
| | | | Reference Example 2 | - | - | - | ○ | - | - | - |
| | | | Reference Example 3 | - | - | - | - | ○ | - | - |
| | | | Reference Example 4 | - | - | - | - | - | ○ | - |
| | | Polyamide 6I/6T | | - | - | - | - | - | - | ○ |
| Polyamide resin composition | Main component | | | Polyamide 6 | Polyamide 6 | Polyamide 6 | Polyamide 6 | Polyamide 6 | Polyamide 6 | Polyamide 6I/6T |
| | Content of filler | Parts by weight | | 43 parts | 43 parts | 43 parts | 43 parts | 43 parts | 43 parts | 43 parts |
| Heat quantity required for melting Q | | J/g | | 380 | 380 | 380 | 400 | 350 | 390 | 340 |
| SP value (solubility parameter) | | (cal/cm$^3$)$^{1/2}$ | | 11.6 | 11.6 | 11.6 | 11.6 | 11.6 | 11.6 | 12.4 |
| Welding strength | | N | | > 1200 | > 1200 | > 1200 | 1020 | > 1200 | 1070 | > 1200 |
| Flexural modulus | | GPa | | 50 | 19 | 20 | 50 | 50 | 50 | 50 |
| Evaluation of amount of warpage | | - | | A | A | A | A | A | A | A |

[Table 1-2]

| | | | | Example 8 | Example 9 | Example 10 | Example 11 | Example 12 | Example 13 |
|---|---|---|---|---|---|---|---|---|---|
| Fiber-reinforced polyamide resin base | Reinforcing fiber base | Reinforcing fibers | | Carbon fibers | Carbon fibers | Carbon fibers | Carbon fibers | Carbon fibers | Carbon fibers |
| | | Arrangement of reinforcing fibers | | One direction | One direction | One direction | One direction | One direction | One direction |
| | Polyamide resin for impregnation | Polyamide 6/66 | Reference Example 1 | - | ○ | ○ | ○ | ○ | ○ |
| | | | Reference Example 2 | - | - | - | - | - | - |
| | | | Reference Example 3 | - | - | - | - | - | - |
| | | | Reference Example 4 | - | - | - | - | - | - |
| | | Polyamide 6I/6T | | ○ | - | - | - | - | - |
| Polyamide composition | Main component | | | Polyamide 6 | Polyamide 6 | Polyamide 6 | Polyamide 6 | Polyamide 6 | Polyamide 6 |
| | Content of filler | | Parts by weight | 43 parts | 43 parts | 0 parts | 18 parts | 82 parts | 150 parts |
| Heat quantity required for melting Q | | | J/g | 340 | 380 | 380 | 380 | 380 | 380 |
| SP value (solubility parameter) | | | $(cal/cm^3)^{1/2}$ | 12.4 | 11.6 | 11.6 | 11.6 | 11.6 | 11.6 |
| Welding strength | | | N | > 1200 | > 1200 | > 1200 | > 1200 | > 1200 | 980 |
| Flexural modulus | | | GPa | 50 | 50 | 47 | 44 | 52 | 57 |
| Evaluation of amount of warpage | | | - | A | B | C | A | A | A |

[Table 2-1]

| | | | | Comparative Example 1 | Comparative Example 2 | Comparative Example 3 | Comparative Example 4 |
|---|---|---|---|---|---|---|---|
| Fiber-reinforced polyamide resin base | Reinforcing fiber base | | | Carbon fibers | Carbon fibers | Carbon fibers | Carbon fibers |
| | Orientation of reinforcing fibers | | | One direction | One direction | One direction | One direction |
| | Polyamide resin for impregnation | Polyamide 6 | | ○ | - | - | - |
| | | Polyamide 66 | | - | - | - | ○ |
| | | Polyamide 610 | | - | - | - | - |
| | | Polyamide 12 | | - | - | - | - |
| | | Polyamide 6/66 — Reference Example 1 | | - | - | - | - |
| | | Polyamide 6/66 — Reference Example 5 | | - | ○ | - | - |
| | | Polyamide 6/66 — Reference Example 6 | | - | - | ○ | - |
| Polyamide resin composition | Main component | | | Polyamide 6 | Polyamide 6 | Polyamide 6 | Polyamide 6 |
| | Content of filler | | Parts by weight | 43 parts | 43 parts | 43 parts | 43 parts |
| Heat quantity required for melting Q | | | J/g | 450 | 435 | 500 | 600 |
| SP value (solubility parameter) | | | $(cal/cm^3)^{1/2}$ | 11.6 | 11.6 | 11.6 | 11.6 |
| Welding strength | | | N | 600 | 620 | Poor | Poor |
| Flexural modulus | | | GPa | 50 | 50 | 50 | 50 |
| Evaluation of amount of warpage | | | - | A | A | A | A |

[Table 2-2]

| | | | Comparative Example 5 | Comparative Example 6 | Comparative Example 7 | Comparative Example 8 |
|---|---|---|---|---|---|---|
| Fiber-reinforced polyamide resin base | Reinforcing fiber base | Reinforcing fibers | Carbon fibers | Carbon fibers | Carbon fibers | Carbon fibers |
| | | Orientation of reinforcing fibers | One direction | One direction | One direction | One direction |
| | Polyamide resin for impregnation | Polyamide 6 | - | - | - | ○ |
| | | Polyamide 66 | - | - | - | - |
| | | Polyamide 610 | ○ | - | - | - |
| | | Polyamide 12 | - | ○ | - | - |
| | | Polyamide 6/66 — Reference Example 1 | - | - | ○ | ○ |
| | | Polyamide 6/66 — Reference Example 5 | - | - | - | - |
| | | Polyamide 6/66 — Reference Example 6 | - | - | - | - |
| Polyamide resin composition | Main component | | Polyamide 6 | Polyamide 6 | Polyamide 6 | Polyamide 6 |
| | Content of filler | Parts by weight | 43 parts | 43 parts | 43 parts | 43 parts |
| Heat quantity required for melting Q | | J/g | 470 | 370 | 500 | 440 |
| SP value (solubility parameter) | | $(cal/cm^3)^{1/2}$ | 10.8 | 10.6 | 11.6 | 11.6 |
| Welding strength | | N | 200 | 200 | Poor | 700 |
| Flexural modulus | | GPa | 50 | 50 | 50 | 50 |
| Evaluation of amount of warpage | | - | A | A | A | A |

DESCRIPTION OF REFERENCE SIGNS

1: Fiber-reinforced polyamide resin base

2: Polyamide resin molded article

3: Welding surface

**Claims**

1. A composite molded article formed from a polyamide resin, comprising:

   a fiber-reinforced polyamide resin base including a reinforcing fiber base and a polyamide resin for impregnation that is impregnated into the reinforcing fiber base; and
   a polyamide resin molded article formed from a polyamide resin composition,
   the fiber-reinforced polyamide resin base and the polyamide resin molded article being at least partially bonded together,
   the polyamide resin for impregnation having a heat quantity required for melting that satisfies $300 < Q < 425$ (J/g) and a solubility parameter (SP value) as calculated from Fedors' equation that satisfies $11 < \sigma < 13.2$ $((cal/cm^3)^{1/2})$.

2. The composite molded article formed from a polyamide resin according to claim 1, wherein the polyamide resin for impregnation contains a polyamide copolymer containing 30 to 90% by weight of a polyamide 6 component and 70 to 10% by weight of a polyamide 66 component.

3. The composite molded article formed from a polyamide resin according to claim 1 or 2, wherein the polyamide resin composition contains a polyamide resin and 10 to 250 parts by weight of a filler based on 100 parts by weight of the polyamide resin.

4. The composite molded article formed from a polyamide resin according to any one of claims 1 to 3, wherein the polyamide resin composition contains a polyamide 6 resin as a main component.

5. The composite molded article formed from a polyamide resin according to any one of claims 1 to 4, wherein the reinforcing fiber base is formed from continuous reinforcing fibers arranged in one direction.

6. The composite molded article formed from a polyamide resin according to claim 5, wherein the reinforcing fibers are carbon fibers, and the fiber-reinforced polyamide resin base has a fiber content of 10 to 70% by volume.

7. A method for producing a composite molded article formed from a polyamide resin, the method comprising:

   preliminarily placing, in a mold, a fiber-reinforced polyamide resin base including a reinforcing fiber base and a polyamide resin for impregnation that is impregnated into the reinforcing fiber base;
   injection-molding a polyamide resin composition into the mold; and
   fusion-bonding the polyamide resin composition with the fiber-reinforced polyamide resin base,
   the polyamide resin for impregnation having a heat quantity required for melting that satisfies $300 < Q < 425$ (J/g) and a solubility parameter (SP value) as calculated from Fedors' equation that satisfies $11 < \sigma < 13.2$ $((cal/cm^3)^{1/2})$.

8. The production method according to claim 7, wherein the polyamide resin for impregnation contains a polyamide copolymer containing 30 to 90% by weight of a polyamide 6 component and 70 to 10% by weight of a polyamide 66 component.

9. The production method according to claim 7 or 8, wherein the polyamide resin composition contains a polyamide resin and 10 to 250 parts by weight of a filler based on 100 parts by weight of the polyamide resin.

10. The production method according to any one of claims 7 to 9, wherein the polyamide resin composition contains a polyamide 6 resin as a main component.

11. The production method according to any one of claims 7 to 10, wherein the reinforcing fiber base is formed from continuous reinforcing fibers arranged in one direction.

12. The production method according to claim 11, wherein the reinforcing fibers are carbon fibers, and the fiber-reinforced polyamide resin base has a fiber content of 10 to 70% by volume.

FIG. 1

Front view

Side view

## INTERNATIONAL SEARCH REPORT

| | International application No. |
|---|---|
| | PCT/JP2017/019897 |

| A. CLASSIFICATION OF SUBJECT MATTER |
|---|
| B29C45/14(2006.01)i, B29C65/40(2006.01)i, B32B27/34(2006.01)i |

According to International Patent Classification (IPC) or to both national classification and IPC

| B. FIELDS SEARCHED |
|---|
| Minimum documentation searched (classification system followed by classification symbols) |
| B29C45/14, B29C65/40, B32B27/34 |

| Documentation searched other than minimum documentation to the extent that such documents are included in the fields searched |
|---|
| Jitsuyo Shinan Koho          1922–1996   Jitsuyo Shinan Toroku Koho   1996–2017 |
| Kokai Jitsuyo Shinan Koho    1971–2017   Toroku Jitsuyo Shinan Koho   1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| P,A | JP 2016-203401 A (Toray Industries, Inc.), 08 December 2016 (08.12.2016), entire text (Family: none) | 1-12 |
| A | JP 11-348067 A (Mitsubishi Engineering-Plastics Corp.), 21 December 1999 (21.12.1999), comparative example 2 (Family: none) | 1-12 |
| A | JP 9-12877 A (Ube Industries, Ltd.), 14 January 1997 (14.01.1997), entire text (Family: none) | 1-12 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 August 2017 (02.08.17) | 15 August 2017 (15.08.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11348067 A
- JP 3191638 B